# EUROPEAN PATENT SPECIFICATION

(11) **EP 1 883 728 B1**
(45) Date of publication and mention of the grant of the patent: **02.08.2017**
(21) Application number: 06732681.9
(22) Date of filing: 31.03.2006
(51) Int. Cl.: D06F 39/08, D06F 39/04

(54) **WATER LEVEL SENSOR FOR STEAM GENERATOR**
WASSERSTANDSSENSOR FÜR DAMPFERZEUGER
DETECTEUR DE NIVEAU D'EAU POUR GENERATEUR DE VAPEUR

(30) Priority: 23.05.2005 KR 20050042996
(43) Date of publication of application: 06.02.2008
(73) Proprietor: LG Electronics Inc., Seoul 07336 (KR)
(72) Inventor: CHO, Ki Chul, Masan-si, Gyeongsangnam-do 631-480 (KR)
(74) Representative: Ter Meer Steinmeister & Partner
(86) International application number: PCT/KR2006/001078
(87) International publication number: WO 2006/126779

(56) References cited:
- EP-A1- 1 507 031
- EP-A1- 1 507 031
- EP-A1- 1 616 990
- EP-A2- 1 507 029
- EP-A2- 1 507 029
- DE-A1- 2 536 822
- DE-C- 546 752
- JP-A- H07 270 216
- JP-A- 2002 107 203

## Description

### Technical Field

The present invention relates to a water level sensor installed in a steam generator of a washing or a drying machine, and more particularly, to a separation-type water level sensor and a steam generator of a washing or drying machine having the same.

### Background Art

Generally, a washing machine serves to wash laundry, and a drying machine serves to dry wet laundry using hot air after washing. Recently, a washing and drying machine having both washing and drying functions has become widely used.

Particularly, washing machines are divided into a pulsator washing machine which washes laundry using a water current generated by rotating a flat plate-type pulsator, and a drum washing machine which washes laundry using head drop of washing water and the laundry and frictional force between the washing water and the laundry, which are generated in a drum by rotating the drum.

Compared to the pulsator washing machine, the drum washing machine uses low amounts of water and detergent, and does not cause damage to laundry and entanglement of the laundry, thus being increasingly demanded.

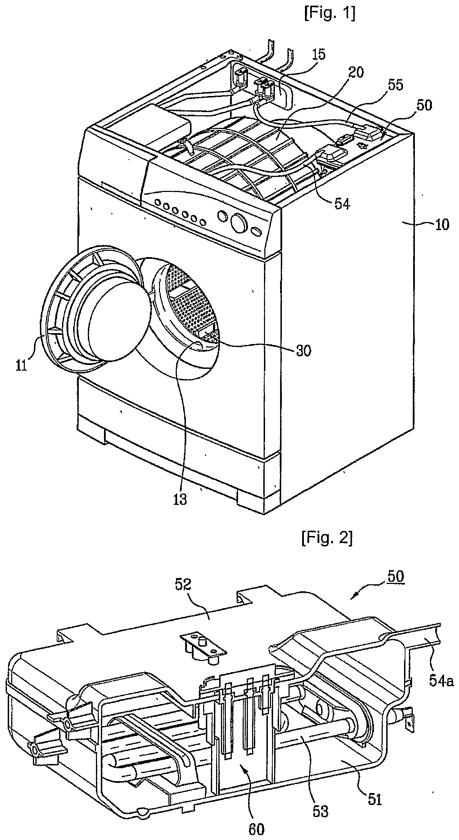

Hereinafter, with reference to FIGS. 1 to 3, a structure of a steam generator of a conventional drum washing machine will be described.

As shown in FIG. 1, the conventional drum washing machine comprises a cabinet 10 forming the external appearance of the washing machine, a cylindrical tub 20 supported in the cabinet 10 for storing washing water, a drum 30 provided with through holes for passing the washing water and steam and rotatably installed in the tub 20, a driving motor 40 for driving the drum 30, and at least one steam generator 50 for supplying steam to the inside of the drum 30.

An opening 13 connected to the inside of the drum 30 for putting and taking the laundry into and out of the washing machine is formed through the front surface of the cabinet 10, and a door 11 for opening and closing the opening 13 is forwardly rotatably installed on the front surface of the cabinet 10.

Further, a gasket (not shown) for preventing the washing water from leaking through a connection portion between the door 11 and the tub 20 is installed along the inner circumferential surface of the opening 13.

A water supply valve 15 connected to an external water pipe (not shown) for supplying the washing water to the tub 20 is installed in one side of the drum washing machine.

The steam generator 50 is connected to the water supply valve 15 for receiving the washing water, heats the washing water stored therein to generate steam, and supplies the generated steam to the drum 30.

A steam supply pipe 54 serving as a passage for guiding the steam generated from the steam generator 50 to the inside of the drum 30 and a water supply pipe 55 for supplying the washing water from the water supply valve 15 to the steam generator 50 therethrough are installed at one side of the steam generator 50.

Preferably, the steam supply pipe 54 has a nozzle-shaped end for smoothly spraying the steam to the inner space of the drum 30, and the end of the steam supply pipe 54 is exposed to the inside of the drum 30.

In order to prevent the steam sprayed to the inside of the drum 30 from directly contacting laundry, preferably, the end of the steam supply pipe 54 connected to the drum 30 is connected to one side of the upper part of the drum 30, or passes through the gasket.

Further, preferably, the steam supply pipe 54 and the water supply pipe 55 have relatively small lengths and the steam generator 50 is installed above the tub 20 so that the steam generator 50 is easily repaired and checked.

With reference to FIG. 2, the structure of the steam generator 50 is described, as follows.

As shown in FIG. 2, the steam generator 50 comprises a base case 51 forming the external appearance of the steam generator 50 and having a space for storing water, a cover case 52 connected to the upper surface of the base case 51, and a heater 53 for heating the water stored in the steam generator 50.

A water supply hole (not shown) connected to the water supply pipe 55 for supplying water to the inside of the steam generator 50 is formed through one side of the cover case 52, and a water discharge hole 54a connected to the steam supply pipe 54 for discharging the generated steam to the drum 30 is formed through the other side of the cover case 52.

The heater 53 is installed on the bottom of the base case 51. Preferably, when water is supplied to the steam generator 50, the heater 53 directly heats the water under the condition that the heater 53 is completely soaked in the water.

A water level sensor 60 for sensing a water level in the steam generator 50 to maintain the proper amount of the stored water is installed at the cover case 52.

That is, when the water level in the steam generator 50 is lower than a reference value, the water level sensor 60 opens the water supply valve 15 to additionally supply water to the steam generator 50, and when the water level in the steam generator 50 is higher than the reference value, the water level sensor 60 closes the water supply valve 15 to stop the supply of the water and operates the heater 53 to generate steam.

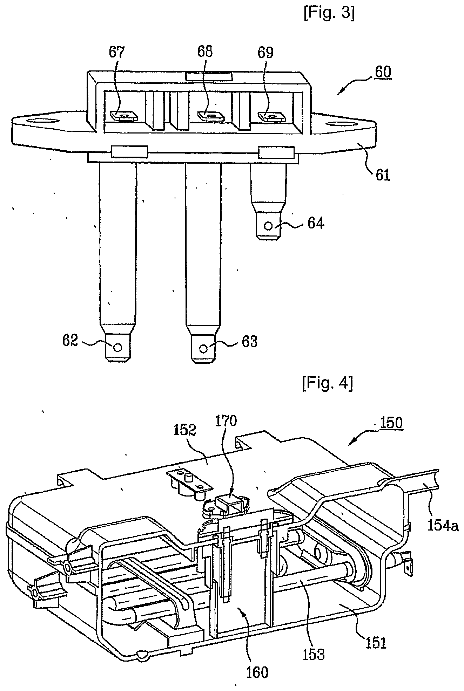

With reference to FIG. 3, a structure of the water level sensor 60 is described in detail, as follows.

The water level sensor 60 comprises a receptacle housing 61 forming the external appearance of the water level sensor 60 and fixed to the steam generator 50, and electrodes 62, 63, and 64 installed at the lower part of the housing 61 for sensing the water level in the steam generator 50. Ends of the electrodes 62, 63, and 64 are exposed and contact water, and the other ends of the electrodes 62, 63, and 64 are provided with terminals 67, 68, and 69 electrically connected to an external device.

The housing 61 is fixed to the outer surface of the base case 51 by bolts, and a plug, housing (not shown) for electrical connection with the external device is supportably inserted into the upper part of the housing 61.

The electrodes 62, 63, and 64 are installed at proper heights from the bottom surface of the base case 51 so as to sense the water level in the steam generator 50.

For example, the electrodes 62, 63, and 64 consist of a common electrode 62 serving as a reference electrode for sensing the water level, a low water level electrode 63 for sensing a low water level, and a high water level electrode 64 for sensing a high water level.

Here, the low water level electrode 63 senses the minimum water level at which the heater 53 is not overheated.

The common electrode 62 has a length, which is not smaller than that of the low water level electrode 63.

When the common electrode 62 and the low water level electrode 63 of the water level sensor 60 are soaked in the water stored in the steam generator 50, the common electrode 62 and the low water level electrode 63 are electrically connected via water, thus sensing the low water level.

Further, when the water level in the steam generator 50 is raised and the common electrode 62, the low water level electrode 63, and the high water level electrode 64 of the water level sensor 60 are all soaked in the water stored in the steam generator 50, the common electrode 62 and the high water level electrode 64 are electrically connected via water, thus sensing the high water level.

However, the above water level sensor 60 of the conventional steam generator of the drum washing machine has several problems, as follows.

When the electrodes 62, 63, and 64 are soaked in water so that current flows between the electrodes 62, 63, and 64, the water level sensor 60 generates a sensing signal. Accordingly, when the insulation between the terminals 67, 68, and 69 is damaged, the water level sensor 60 generates an abnormal sensing signal, thus malfunctioning.

That is, water permeates the portion of the water level sensor 60, into which the plug housing (not shown) is inserted, due to a difference of temperatures between the inside and the outside of the steam generator 50, condensation generated by steam, and splashing of water.

In this case, a capillary phenomenon occurs along the connection portion between the housing 61 and the plug housing (not shown), thus forming a water film. Thereby, the terminals 67, 68 and 69 are abnormally connected, and thus the water level sensor 60 generates an abnormal water level sensing signal.

Since the distance between the common electrode 62 and the low water level electrode 63 is comparatively short and the heights of the common electrode 62 and the low water level electrode 63 are the same, the common electrode 62 and the low water level electrode 63 may become abnormally connected by foreign substances even though water is not present in the steam generator 50, and thus the water level sensor 60 abnormally generates a water level sensing signal.

Accordingly, in the case that the water level sensor 60 abnormally generates the high water level sensing signal when water stored in the steam generator 50 substantially reaches the low water level, or abnormally generates the low water level sensing signal when water stored in the steam generator 50 does not substantially reach the minimum water level, the heater 53 is continuously operated under the condition that the heater 53 is not soaked in the water, thus being overheated.

In this case, the overheating of the heater 53 generates thermal deformation and firing of the cover case 52, and thus generates a danger of a fire.

Further, the overheating of the heater 53 excessively consumes electric power and water, thus generating an economic loss.

An object of the present invention devised to solve the problem lies on a water level sensor for a steam generator of a washing or drying machine, which prevents malfunction caused by electrical connection between electrodes due to permeation of water into terminals of the electrodes and malfunction caused by short distance between the terminals so as to uniformly maintain a water level in the steam generator and protect a heater, and a steam generator with the same.

### Technical Solution

The objects are solved by the features of the independent claims. The object of the present invention can be achieved by providing a steam generator of a washing or drying machine comprising a case storing -water for generating steam; and a separation-type water level sensor comprising a common electrode assembly comprising a common electrode and a common electrode housing, and inserted into the case; and a first water level electrode assembly comprising a first water level electrode and a first water level electrode housing, separated from the common electrode assembly, and inserted into the case.

In the case that a heater for heating water to generate steam is installed in the case, preferably, the first water level electrode assembly senses a water level at which the heater is exposed. When an amount of the water stored in the case is small so that the heater is continuously operated under the condition that the heater is exposed from the water, the heater is overheated, thus generating a safety problem. Accordingly, in sensing the water level at which the heater is exposed, malfunction of the water level sensor needs to be eliminated.

The sensing of a first water level using the first water level electrode assembly uses a voltage value of the first water level electrode, and preferably uses whether or not the first water level electrode and the common electrode are electrically connected. Accordingly, preferably, one end of the common electrode is located at a height lower than or the same height as that of one end of the first water level electrode in the case.

When the water level in the steam generator is more than the first water level, the common electrode and the first water level electrode are electrically connected, and when the water level in the steam generator is lowered due to generation of steam and the end of the first water level electrode does not contact the water, a short circuit between the common electrode and the first water level electrode occurs. Thereby, the first water level is sensed.

Since the first water level electrode and the common electrode are respectively installed at separated housings, terminals of the first level electrode and the common electrode connected to a controller are not electrically connected due to moisture.

Further, since the first water level electrode and the common electrode are separated by a sufficient distance, it is possible to prevent the water level sensor from malfunctioning due to electrical connection between the ends of the two electrodes in the case by water drops or foreign substances.

The common electrode assembly further comprises a second water level electrode. Preferably, the second water level electrode senses a second water level higher than the first water level. Further, preferably, the second water level senses the maximum water level in the case.

Preferably, the common electrode and the second water level electrode are installed in the common electrode housing under that the two electrodes are separated from each other by a sufficient distance. The reason that the second water level electrode is separated from the common electrode is the same as the reason that the first water level electrode is separated from the common electrode.

Further, the sensing of the second water level using the second water level electrode uses a voltage value of the second water level electrode or whether or not the second water level electrode and the common electrode are electrically connected.

Preferably, each of the common electrode assembly and the first water level electrode assembly has a socket shape so that an external plug is inserted into the common electrode assembly and the first water level electrode assembly and is electrically connected thereto. The water level sensor is electrically connected to a controller by inserting a plug of the controller into the socket-shaped assemblies.

### Advantageous Effects

The water level sensor of the present invention has several effects, as follows.

First, since a common electrode and a first water level electrode are separated from each other, it is possible to prevent the water level sensor from malfunctioning due to electrical connection between the two electrodes.

Second, since a common electrode terminal and a second water level electrode terminal are distant from each other such that diaphragms are formed between the two electrodes, and the common electrode terminal and a first water level terminal are separated from each other, it is possible to prevent the generation of a water film between the electrodes, condensation, or splashing of water, thus preventing the water level sensor from malfunctioning.

DE 25 36 822 A1 relates to an electrode assembly for monitoring a water level in steam kettles. By providing a further control electrode at the level of a pressure equalizing opening in a protection tube of the water level electrode, al malfunctioning of the water level detection due to foam entering via the pressure equalizing opening to the level electrode can be prevented. The control electrode is either provided separately with an extra housing or within the protection tube of the water level electrode.

DE 546 752 relates to an electrical water level detection means with a plurality of electrodes arranged at different levels. By providing each electrode with a separate housing, switching between electrodes caused by water droplets or dirt particles can be prevented.

### Brief Description of the Drawings

The accompanying drawings, which are included to provide a further understanding of the invention, illustrate embodiments of the invention and together with the description serve to explain the principle of the invention.

In the drawings:
FIG. 1 is a perspective view of a conventional drum washing machine having a steam generator;
FIG. 2 is a perspective view of the steam generator;
FIG. 3 is a front view of a water level sensor of FIG. 2;
FIG. 4 is a perspective view of a steam generator having a water level sensor in accordance with an embodiment of the present invention; and
FIG. 5 is a front view illustrating the water level sensor and a heater-protecting water level sensor of FIG. 4.

### Best Mode for Carrying Out the Invention

Reference will now be made in detail to the preferred embodiment of the present invention, examples of which are illustrated in the accompanying drawings. Wherever possible, the same reference numbers will be used throughout the drawings to refer to the same or like parts.

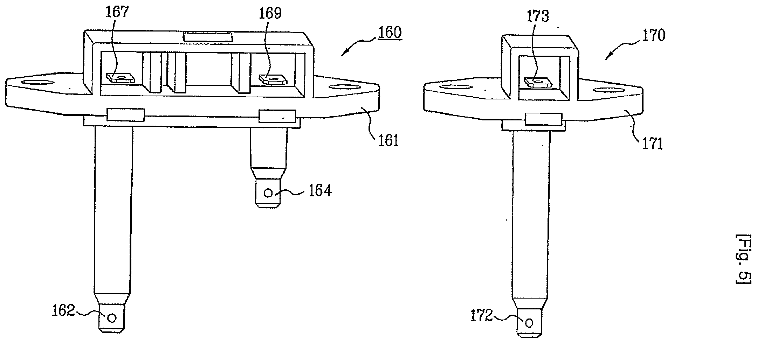

Hereinafter, with reference to FIGS. 4 and 5, a water level sensor for a steam generator of a drum washing machine in accordance with an embodiment of the present invention will be described.

In this embodiment, a water level sensor for sensing a water level in a steam generator 150 comprises a common electrode assembly 160 and a first water level electrode assembly 170.

The first water level electrode assembly 170 senses a water level at which a heater installed in a case is exposed from water.

The common electrode assembly 160 comprises a common electrode assembly housing 161 installed in the steam generator 150, a common electrode 162, and a second water level electrode 164 for sensing a second water level. A portion of the common electrode assembly 160, which is located at the outside of the steam generator 150, has a socket shape so that a plug (not shown) of a controller is inserted into the socket-shaped portion of the common electrode assembly 160. When the plug of the controller is inserted into the socket-shaped portion of the common electrode assembly 160, terminals 167 and 169 of the common electrode 162 and the second water level sensor 164 are electrically connected to the plug, thereby electrically connecting the controller and the common electrode assembly 160.

The second water level electrode 164 senses the maximum water level in the case. In order to sense the water level step-by-step, third and fourth electrodes may be installed at heights lower than that of the second water level electrode 164.

Preferably, in the common electrode assembly 160, the common electrode 162 and the second water level electrode 164 are separated from each other by a distance, where at least one electrode can be installed.

In order to prevent the common electrode terminal 167 and the second water level electrode terminal 169 from being electrically connected due to a water film, condensation, or splashing of water, preferably, the common electrode terminal 167 and the second water level electrode terminal 169 are separated from each other by a sufficient distance, and more preferably, diaphragms are formed between the two terminals 167 and 169.

When both of ends of the common electrode 162 and the second water level electrode 164 contact water in the case, the common electrode 162 and the second water level electrode 164 are electrically connected, thus sensing a second water level.

The first water level electrode assembly 170 comprises a first electrode housing 171 forming the external appearance of the first water level electrode assembly 170, and a first water level electrode 172 installed at the housing 171 for sensing a water level in the steam generator 150. The same as the common electrode assembly 160, a portion of the first water level electrode assembly 170, which is located at the outside of the steam generator 150, has a socket shape.

A coil heater, which is installed at the outside of the steam generator 150 and heats water stored in the steam generator 150, may be used as a heater 153 of the steam generator 150. More preferably, a sheath heater, which is completely soaked in water stored in the steam generator 150 and directly heats the water, is used as the heater 153 of the steam generator 150, so as to increase thermal efficiency and boil the water in a short time.

In the case, the height of the end of the common electrode 162 and the height of the end of the first water level electrode 172 are the same.

The height of the end of the common electrode 162 may be lower than that of the end of the first water level electrode 172, or the end of the common electrode 162 may be located at a water level to be sensed by the first water level electrode 172 and the end of the first water level electrode 172 is located below the end of the common electrode 162.

In order to prevent the common electrode 162 and the first water level electrode 172 from being electrically connected by foreign substances, the common electrode assembly 160 and the first water level electrode assembly 170 are separated from each other by a sufficient distance.

When both of the ends of the first water level electrode 172 and the common electrode 162 contact water in the case, the first water level electrode 172 and the common electrode 162 are electrically connected, thus sensing a first water level.

### Industrial Applicability

The present invention provides a separation-type water level sensor and a steam generator of a washing or drying machine having the same.

The water level sensor of the present invention has several effects, as follows.

First, since a common electrode and a first water level electrode are separated from each other, it is possible to prevent the water level sensor from malfunctioning due to electrical connection between the two electrodes.

Second, since a common electrode terminal and a second water level electrode terminal are distant from each other such that diaphragms are formed between the two electrodes, and the common electrode terminal and a first water level terminal are separated from each other, it is possible to prevent the generation of a water film between the electrodes, condensation, or splashing of water, thus preventing the water level sensor from malfunctioning.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A steam generator (150) of a washing or drying machine comprising:
a case (152) storing water for generating steam;
a heater (153) installed in the case (152); and
a separation-type water level sensor comprising:
a common electrode assembly (160) comprising a common electrode (162) serving as a reference electrode for sensing the water level; and
a first water level electrode assembly (170) comprising a first water level electrode (172) sensing a level of water out of which at least a part of the heater (153) is exposed,
**characterized in that**
the common electrode assembly (160) further comprises a common electrode housing (161) in which the common electrode (162) is installed, the common electrode assembly (160) being inserted into the case (152); and
the first water level electrode assembly (170) further comprises a first water level electrode housing (171) in which the first water level electrode (172) is installed, the first water level electrode assembly (170) being separated from the common electrode assembly (160) and inserted into the case (152).

2. The steam generator as set forth in claim 1, wherein the common electrode assembly (160) further comprises a second water level electrode (164).

3. The steam generator as set forth in claim 1, wherein each of the common electrode assembly (160) and the first water level electrode assembly (170) has a socket so that an external plug is insertable into the socket to be electrically connected to the common electrode assembly (160) and the first water level electrode assembly (170).

4. A separation-type water level sensor for a steam generator (150) comprising:
a common electrode assembly (160) comprising a common electrode (162), which, when the sensor is installed in a case (152) storing the water of the steam generator (150), serves as a reference electrode for sensing the water level; and
a first water level electrode assembly (170) comprising a first water level electrode (172), which, when the sensor is installed in the case (152) storing the water, senses a level of water out of which at least a part of a heater (153) installed in the case (152) is exposed,
**characterized in that**
the common electrode assembly (160) further comprises a common electrode housing (161), in which the common electrode (162) is installed; and
the first water level electrode assembly (170) further comprises a first water level electrode housing (171) in which the first water level electrode (172) is installed, the first water level electrode assembly (170) being separated from the common electrode assembly (160) and inserted into the case (152).

5. The separation-type water level sensor for a steam generator (150) as set forth in claim 4, wherein the common electrode assembly (160) further comprises a second water level electrode (164).

## Patentansprüche

1. Dampfgenerator (150) einer Wasch- oder Trocknungsmaschine, der Folgendes umfasst:
ein Gehäuse (152), um Wasser für die Erzeugung von Dampf aufzubewahren;
eine Heizeinrichtung (153), die in dem Gehäuse (152) installiert ist; und
einen Wasserpegelsensor des Trennungstyps, der Folgendes umfassen:
eine Anordnung (160) einer gemeinsamen Elektrode, die eine gemeinsame Elektrode (162) aufweist, die als eine Referenzelektrode zum Erfassen des Wasserpegels dient; und
eine Anordnung (170) einer ersten Wasserpegelelektrode, die eine erste Wasserpegelelektrode (172) aufweist, die einen Wasserpegel erfasst, von dem wenigstens ein Teil der Heizeinrichtung (153) vorsteht,
**dadurch gekennzeichnet, dass**
die Anordnung (160) einer gemeinsame Elektrode ferner eine Umschließung (161) der gemeinsamen Elektrode aufweist, in der die gemeinsame Elektrode (162) installiert ist, wobei die Anordnung (160) in das Gehäuse (152) eingesetzt ist, und
die Anordnung (170) einer ersten Wasserpegelelektrode ferner eine Umschließung (171) der ersten Wasserpegelelektrode aufweist, in der die erste Wasserpegelelektrode (172) installiert ist, wobei die Anordnung (170) einer ersten Wasserpegelelektrode von der Anordnung (160) einer gemeinsamen Elektrode getrennt und in das Gehäuse (152) eingesetzt ist.

2. Dampfgenerator nach Anspruch 1 wobei die Anordnung (160) einer gemeinsamen Elektrode ferner eine zweite Wasserpegelelektrode (164) umfasst.

3. Dampfgenerator nach Anspruch 1, wobei sowohl die Anordnung (160) einer gemeinsamen Elektrode als auch die Anordnung (170) einer ersten Wasserpegelelektrode eine Buchse besitzen, so dass ein externer Stecker in die Buchse eingesteckt werden kann, um mit der Anordnung (160) einer gemeinsamen Elektrode und mit der Anordnung (170) einer ersten Wasserpegelelektrode elektrisch verbunden zu werden.

4. Wasserpegelsensor des Trennungstyps für einen Dampfgenerator (150), der Folgendes umfasst:
eine Anordnung (160) einer gemeinsamen Elektrode, die eine gemeinsame Elektrode (162) aufweist, die dann, wenn der Sensor in einem Gehäuse (152) installiert ist, das Wasser für den Dampfgenerator (150) aufbewahrt, als eine Referenzelektrode zum Erfassen des Wasserpegels dient; und
eine Anordnung (170) einer ersten Wasserpegelelektrode, die eine erste Wasserpegelelektrode (172) aufweist, die dann, wenn der Sensor in dem Gehäuse (152) installiert ist, das Wasser aufbewahrt, einen Wasserpegel erfasst, von dem wenigstens ein Teil einer Heizeinrichtung (153), die in dem Gehäuse (152) installiert ist, vorsteht,
**dadurch gekennzeichnet, dass**
die Anordnung (160) einer gemeinsamen Elektrode ferner eine Umschließung (161) der gemeinsamen Elektrode aufweist, in der die gemeinsame Elektrode (162) installiert ist; und
die Anordnung (170) einer ersten Wasserpegelelektrode ferner eine Umschließung (171) der ersten Wasserpegelelektrode aufweist, in der die erste Wasserpegelelektrode (172) installiert ist, wobei die Anordnung (170) einer ersten Wasserpegelelektrode von der Anordnung (160) einer gemeinsamen Elektrode getrennt und in das Gehäuse (152) eingesetzt.

5. Wasserpegelsensor des Trennungstyps für einen Dampfgenerator (150) nach Anspruch 4, wobei die Anordnung (160) einer gemeinsamen Elektrode ferner eine zweite Wasserpegelelektrode (164) umfasst.

## Revendications

1. Générateur de vapeur (150) d'une machine à laver ou à sécher, comprenant :
un casier (152) qui stocke de l'eau pour générer de la vapeur ;
un dispositif chauffant (153) installé dans le casier (152) ; et
un détecteur de niveau d'eau du type à séparation comprenant :
un ensemble formant électrode commune (160) comprenant une électrode commune (162) servant d'électrode de référence pour détecter le niveau d'eau ; et
un premier ensemble formant électrode de niveau d'eau (170) comprenant une première électrode de niveau d'eau (172) qui détecte un niveau d'eau hors de laquelle au moins une partie du dispositif chauffant (153) est exposée,
**caractérisé en ce que**
l'ensemble formant électrode commune (160) comprend en outre un boîtier d'électrode commune (161) dans lequel l'électrode commune (162) est installée, l'ensemble formant l'électrode commune (160) étant inséré dans le casier (152); et
le premier ensemble formant électrode de niveau d'eau (170) comprend en outre un premier boîtier d'électrode de niveau d'eau (171) dans lequel est installée la première électrode de niveau d'eau (172), le premier ensemble formant électrode de niveau d'eau (170) étant séparé vis-à-vis de l'ensemble formant électrode commune (160) et inséré dans le casier (152).

2. Générateur de vapeur selon la revendication 1, dans lequel l'ensemble formant électrode commune (160) comprend en outre une seconde électrode de niveau d'eau (164).

3. Générateur de vapeur selon la revendication 1, dans lequel chaque ensemble parmi l'ensemble formant électrode commune (160) et le premier ensemble formant électrode de niveau d'eau (170) comprend une prise femelle de telle façon qu'une prise mâle externe est capable d'être insérée dans la prise femelle pour être connectée électriquement à l'ensemble formant électrode commune (160) et au premier ensemble formant électrode de niveau d'eau (170).

4. Capteur de niveau d'eau du type à séparation pour un générateur de vapeur (150), comprenant :
un ensemble formant électrode commune (160) comprenant une électrode commune (162) qui, quand le capteur est installé dans un casier (152) stockant l'eau du générateur de vapeur (150), sert d'électrode de référence pour détecter le niveau d'eau ; et
un premier ensemble formant électrode de niveau d'eau (170) comprenant une première électrode de niveau d'eau (172) qui, quand le capteur est installé dans le casier (152) qui stocke l'eau, détecte un niveau de l'eau hors de laquelle au moins une partie d'un dispositif chauffant (152) installé dans le casier (152) est exposée,
**caractérisé en ce que**
l'ensemble formant électrode commune (160) comprend en outre un boîtier d'électrode commune (161), dans lequel l'électrode commune (162) est installée ; et
le premier ensemble formant électrode de niveau d'eau (170) comprend en outre un premier boîtier d'électrode de niveau d'eau (171) dans lequel est installée la première électrode de niveau d'eau (172), le premier ensemble formant électrode de niveau d'eau (170) étant séparé vis-à-vis de l'ensemble formant électrode commune (160) et inséré dans let casier (152).

5. Capteur de niveau d'eau du type à séparation pour un générateur de vapeur (150) selon la revendication 4, dans lequel l'ensemble formant électrode commune (160) comprend en outre une seconde électrode de niveau d'eau (164).
